Europäisches Patentamt

European Patent Office

Office européen des brevets

(19)

(11) Publication number: **0 169 599**
A2

# (12) EUROPEAN PATENT APPLICATION

(21) Application number: **85201080.0**

(22) Date of filing: **04.07.85**

(51) Int. Cl.⁴: **G 02 C 7/04**

(30) Priority: **23.07.84 NL 8402324**

(43) Date of publication of application:
**29.01.86 Bulletin 86/5**

(84) Designated Contracting States:
**AT BE CH DE FR GB IT LI LU NL SE**

(71) Applicant: **Visser contactlenzenpraktijk b.v.**
**Heyendaalseweg 101**
**NL-6524 SJ Nijmegen(NL)**

(72) Inventor: **Visser, R.**
**Twaalf Apostelenweg 8**
**NL-6524 LW Nijmegen(NL)**

(74) Representative: **Flamman, Han**
**LIOC Patents and Licensing P.O. Box 54**
**NL-3970 AB Driebergen(NL)**

(54) **Trifocal eye-contactlens.**

(57) Trifocal eye-contactlens consisting of three, mainly concentric parts. – A central part correcting the course of lightrays in case of myopia, an outer circular part, correcting the rays in case of presbyopia and between these two parts a – circular – transitium-part, in which the focal distance changes gradually from the value of the central part, to that of the outer part.

Fig. 1

Fig. 2

EP 0 169 599 A2

## Trifocal eye-contactlens

The invention relates to an eye-contactlens, consisting of mainly concentric parts, having mutually different focal distances.

Such lenses are well-known. For instance lenses are known correcting the course of light-rays to the eye in case of presbyopia and having at their convex outer surface a brim-part, ground for correcting rays in case of myopia. The surface of the brim-part, being part of the outer surface of the lens, then has a smaller radius than the part of the outer surface it surrounds - the central part - , while the thickness of that brim-part gradually decreases towards the edge of the lens. Also eye-contactlenses are known, correcting the course of rays in case of myopia, provided with a bowl-shaped recess in the concave innersurface for correction of presbyopia.

These known bifocal lenses have disadvantages: a sharp image is only obtained for two distance-intervals, whereas the transition from far-seeing to short-seeing is a discontinuous one, which is considered an inconvenience.

It has been tried to overcome the said disadvantages by designing multi-focal lenses, where the power of the lens changes gradually from the middle (part) of the lens towards the edge thereof. This however entails the disadvantage, that because of the changing power an optimally sharp image on the retina is never obtained.

The eye-contactlens according to the invention avoids the disadvantages, both of the bifocal lens and of the multi-focal lens. To that end, the eye-contactlens according to the invention is characterised in that the lens consists of at least three such parts:

- a central part (4), confined by the brims of a bowl-shaped recess at the inside/concave side of the lens;
- a brim-part (6) around the periphery of the lens, having at the outside - the convex side - of the lens a surface with a radius which is smaller than that of the surface of the inner part and having a thickness which from the inside to the outside decreases gradually;
- a part (5), situated between the central part (4) and the brim-part (6), the surfaces of which, both at the inside and at the outside of the lens connect the surfaces of the central part (4) and the brim-part (6).

The brim-part and the middle part in most of these lenses are concentric with the central part. Thus it is made possible with one lense, to correct both for presbyopia and for myopia, whereas the part-in-between procures a good image-forming for the distance-interval between 'close by' and 'far off'. A further positive contribution is, that it secures the transition from far-seeing to short-seeing to be a gradual one, thus avoiding the earlier menioned inconvenience for the user.

In practise it turned out, that optimal results are obtained if, measured in radial direction, the width of the part, situated between the central part and the brim-part is 0,3 - 0,5 mm, preferentially 0,4 mm.

The invention will be further explained by means of the drawing, which by way of example schematically shows a lens according to the invention.

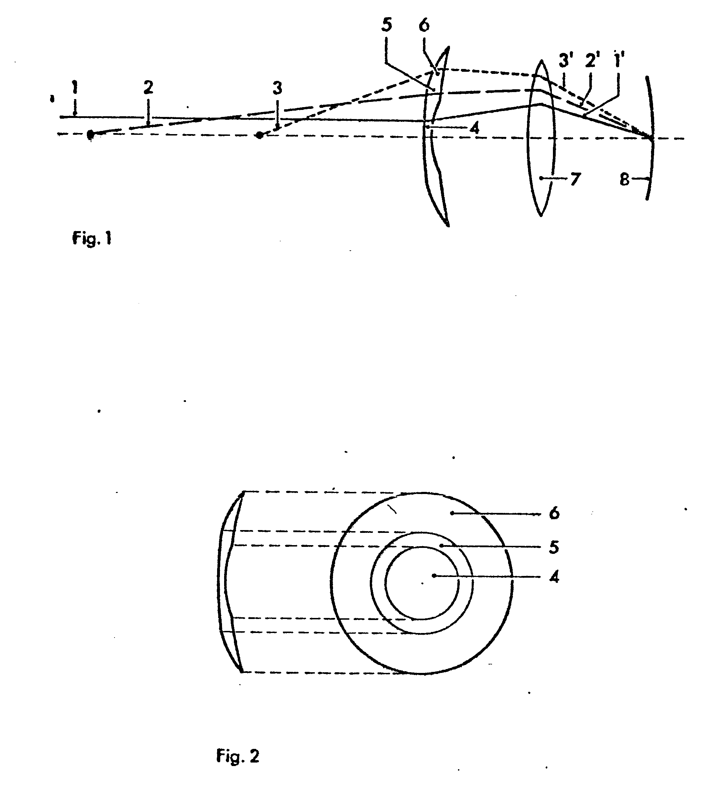

Fig. 1 shows how a sharp image is obtained on the retina of the eye by lightrays, reaching the retina via the three parts of the lens and via the eye-lens.

Fig. 2 shows a front-view of - and a crosssection through a lens according to the invention.

The rays 1, 3 and 2, coming from respectively far away, from close-by and from somewhere in between are corrected by the lense-parts 4, 6 and 5 such, that via the eye-lens 7 and the continued rays 1', 3' and 2' on the retina a sharp image is obtained.

0169599

- 4 -

Claims:

1. Eye-contactlens, consisting of mainly concentric parts, having mutually different focal distances, characterised in that the lens consists of at least three such parts:
- a central part (4), confined by the brims of a bowl-shaped recess of the inside/concave side of the lens;
- a brim-part (6) around the periphery of the lens, having at the outside - the convex side - of the lens a surface with a radius which is smaller than that of the surface of the inner part and having a thickness which from the inside to the outside decreases gradually;
- a part (5), situated between the central part (4) and the brim-part (6), the surfaces of which, both at the inside and at the outside of the lens connect the surfaces of the central part (4) and the brim-part (6).

2. Eye-contactlens according to claim 1, characterised in that, measured in radial direction, the width of the part (5), situated between the central part (4) and the brim-part (6) is 0,3 - 0,5 mm, preferentially 0,4 mm.

0169599

Fig. 1

Fig. 2